# EUROPÄISCHE PATENTSCHRIFT

(11) **EP 1 316 130 B1**
(45) Veröffentlichungstag und Bekanntmachung des Hinweises auf die Patenterteilung: **13.10.2004**
(21) Anmeldenummer: 01971925.1
(22) Anmeldetag: 18.08.2001
(51) Int. Cl.: H01T 19/04, B29C 59/10

(54) **VORRICHTUNG ZUR CORONABEHANDLUNG UND SCHWENKHALTERUNG FÜR EINE ELEKTRODE**
CORONA TREATMENT DEVICE AND PIVOTAL HOLDING DEVICE FOR AN ELECTRODE
DISPOSITIF POUR TRAITEMENT CORONA ET SYSTEME DE RETENUE PIVOTANT POUR ELECTRODE

(30) Priorität: 28.08.2000 DE 10042173
(43) Veröffentlichungstag der Anmeldung: 04.06.2003
(73) Patentinhaber: AFS ENTWICKLUNGS + VERTRIEBS GMBH, 86356 Neusäss (DE)
(72) Erfinder: ARLT, Gerhard, 86850 Fischach (DE); DINTER, Wolfgang, 86482 Aystetten (DE)
(74) Vertreter: Rapp, Bertram, Dr.
(86) Internationale Anmeldenummer: PCT/EP2001/009549
(87) Internationale Veröffentlichungsnummer: WO 2002/019486

(56) Entgegenhaltungen:
- EP-A- 0 434 177
- DE-A- 19 531 898
- DE-A- 19 640 778
- US-A- 4 636 640
- US-A- 6 007 784

## Beschreibung

Die Erfindung betrifft eine Vorrichtung zur Coronabehandlung eines bahnartigen Materials und insbesondere eine Schwenkhalterung für eine einzelne Elektrode, welche in einer derartigen Vorrichtung Verwendung findet.

Um eine rohe oder beschichtete Kunststoffolie benetzbar bzw. bedruckbar zu machen, muß deren Oberflächenenergie erhöht werden. Dies erfolgt üblicherweise durch energiereiche Behandiung der Folienoberfläche und zwar bevorzugt dadurch, daß die Folie einer elektrischen Coronabehandlung ausgesetzt wird. Die direkt vom Extruder oder von einer Rolle kommende Folie durchläuft dabei eine Coronaentladung, welche über die gesamte Folienbreite reichen kann. Hierbei erhöht sich die Oberflächenenergie der Folie, wodurch Druckfarben auf dieser haften und nicht mehr abperlen.

Vorrichtungen zur Coronabehandlung von Folien oder beliebigem anderen bahnartigen Material beschreiben beispielsweise die DE 195 31 898 und die DE-U 94 02 370, auf deren Inhalt Bezug genommen wird.

Besonders durchgesetzt haben sich in jüngster Zeit Vorrichtungen zur Coronabehandlung, bei denen die Elektroden mit Keramik beschichtet oder mit einer keramischen Umhüllung versehen sind. Häufig wird beispielsweise ein stabförmiges, innen metallisiertes Keramikrohr, welches parallel zur Walzenoberfläche angeordnet ist, auf der die Folie läuft, benutzt. Eine einzelne Elektrode genügt jedoch in der Regel nicht, sondern es müssen immer mehrere Elektroden hintereinander eingesetzt werden, um eine ausreichend starke Coronabehandlung der Folie oder des bahnartigen Materials zu erzielen. Diese mehreren, hintereinander entlang der Oberfläche der Walze angeordneten Elektroden sind an einem Rahmen gelagert, der gegenüber der Walze um eine zur Walzenachse parallele Achse verschwenk- oder verfahrbar ist. Dieses Wegschwenken des Rahmens mit den Elektroden von der Walze ist aus mehreren Gründen nötig. Zum einen muß zum Einlegen einer neuen, zu behandelnden Folie bzw. zum Durchführen des sogenannten Einfädelbandes der Rahmen mit den Elektroden von der Oberfläche der Walze weggeschwenkt werden, da zwischen Elektroden und Walzenoberfläche nur ein sehr dünner Spalt mit einer Stärke von etwa 2 mm liegt. Zum zweiten kann es während des Betriebs der Vorrichtung, wenn sich also die Folie mit hoher Geschwindigkeit durch den Behandlungsspalt zwischen Walzenoberfläche und Elektroden bewegt, dazu kommen, daß sich Verdickungen der Folie in diesem Zwischenraum bewegen. Dies ist beispielsweise dann der Fall, wenn der Folienrand gleichzeitig mit der Coronabehandlung abgeschnitten wird und der Schnittrand sich auf der Walze aufwickelt. Auch in diesem Fall muß die Elektrodenanordnung schnell von der Walze weggeschwenkt werden, um eine Beschädigung der empfindlichen Keramikrohre oder -stäbe zu vermeiden.

Nachteilig bei den bekannten Vorrichtungen und Elektrodenanordnungen ist, daß beim Auftreten einer Verdickung, beispielsweise durch das Aufwickeln eines Randstreifens auf der Walze, häufig die davon zuerst betroffenen Keramikrohre oder -stäbe beschädigt werden, und zwar aufgrund der hohen Transportgeschwindigkeit, mit der die Folie durch die Vorrichtung gezogen wird. Ferner ist bei den bekannten Anordnungen nachteilig, daß beim Schließen des Rahmens über der Walze auch die Elektroden beschädigt werden können, wenn sich eine Verdickung auf der Walze befindet, beispielsweise eine verdickte Folie, das Einfädelband oder eine Verschmutzung.

Eine Vorrichtung zur Corona behandlung gemäß Oberbegriff des Anspruchs 1 und eine Schwenkhalterung gemäß Oberbegriff des Anspruchs 4 sind aus US-A-4.636.640 bekannt.

Es besteht daher die Aufgabe, eine Vorrichtung zur Coronabehandlung so weiterzubilden und eine Schwenkhalterung für eine Elektrode bereitzustellen, daß die Beschädigung der Keramikrohre oder -stäbe vermieden wird.

Gelöst wird diese Aufgabe mit dem kennzeichnenden Merkmal des Anspruchs 1 bzw. mit den Merkmalen des Anspruchs 4. Vorteilhafte Ausgestaltungen sind den jeweiligen Unteransprüchen entnehmbar.

Ein Ausführungsbeispiel der Erfindung wird im folgenden unter Bezugnahme auf die begleitenden Zeichnungen näher erläutert, welche zeigen:
- **Figur 1:**: einen Querschnitt durch eine Walze mit einer Elektrodenanordnung an einem Rahmen;
- **Figur 2(a):**: einen Querschnitt durch eine Schwenkhalterung, wie sie in der Vorrichtung nach Figur 1 Verwendung findet;
- **Figuren 2(b) bis (e):**: Seiten- und Vorderansichten der Einzelteile der Schwenkhalterung aus Figur 2 (a).

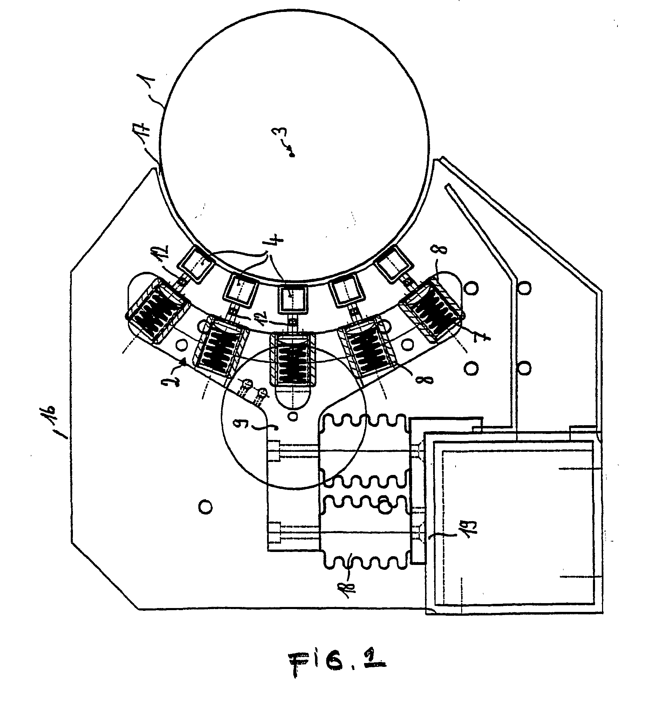

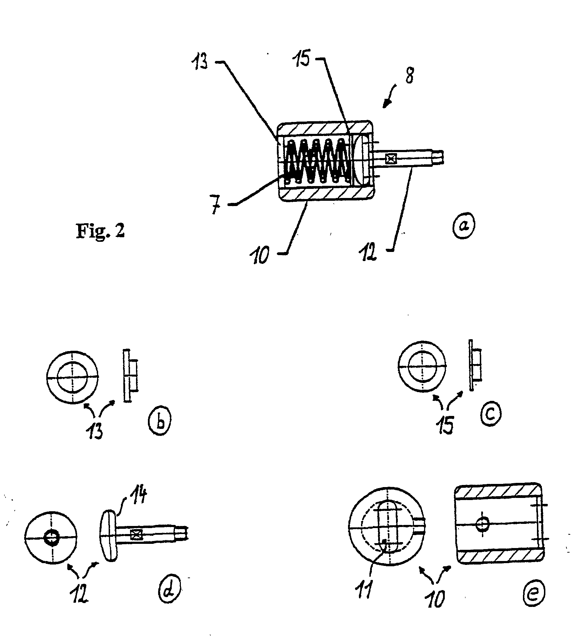

Die in Figur 1 im Querschnitt dargestellte Vorrichtung zur Coronabehandlung eines bahnartigen Materials weist eine Walze 1 auf, die um eine Walzenachse 3 rotiert. Die Walze 1 ist metallisch blank oder mit einem dielektrischen Material beschichtet. Über knapp die Hälfte ihres Umfangs wird die Walze 1 von einem Rahmengehäuse 16 umgriffen. Dieses erstreckt sich entlang des Umfangs der Walze 1 über einen Winkelbereich von etwa 160° um die Walze 1, wobei zwischen der Oberfläche der Walze 1 und dem Rahmengehäuse 16 ein Behandlungsspalt 17 von etwa 2 mm Breite verbleibt. Durch diesen Behandlungsspalt 17 wird das zu behandelnde bahnartige Material, beispielsweise die Folie, geführt. Innerhalb des Rahmengehäuses 16 befindet sich ein Rahmen 9, der über Isolatoren 18 an einem Träger 19 befestigt ist. Dieser Rahmen 9 weist im Querschnitt etwa die Form eines liegenden großen Y auf, das mit seinem Fuß über die Isolatoren an dem Träger 19 befestigt ist und dessen Schenkel die Oberfläche der Walze 1 im Abstand umgreifen. Die Schenkel des Rahmens 9 tragen eine Elektrodenanordnung 2, bestehend aus fünf Schwenkhalterungen 8 mit jeweils einer Elektrode 4. Über die Schwenkhalterungen 8 sind somit die Elektroden 4 an dem Rahmen 9 befestigt. Jede Schwenkhalterung 8 weist ein aus Stahl bestehendes Gehäuse 10 auf, welches zylindrisch ausgebildet ist und durch eine (nicht dargestellte) Verschraubung fest mit dem Rahmen 9 verbunden ist. Durch diese Verbindung wird gleichzeitig die elektrische Verbindung zwischen Gehäuse 10 und Rahmen 9 hergestellt. Jedes Gehäuse 10 ist mit einer schlitzförmigen, senkrecht zur Walzenachse 3 ausgerichteten Bodenöffnung 11 versehen, durch welche ein fest mit der zugehörigen Elektrode 4 verbundener Stift 12 ragt. Dieser Stift 12 erweitert sich innerhalb des Gehäuses 10 pilzförmig und diese Erweiterung 14 wird, vermittelt durch eine Abstützscheibe 15 und eine vorgespannte Schraubenfeder 7 gegen das gegenüberliegende Ende 13 des Gehäuses 10 abgestützt. Diese Anordnung der Teile der Schwenkhalterung 8 aus Gehäuse 10 mit schlitzförmiger Bodenöffnung 11, Stift 12 mit pilzförmiger Erweiterung 14, Abstützscheibe 15 und Gehäuseende bzw. -deckel 13 ist am besten aus Figur 2 (a) ersichtlich, wobei die einzelnen Teile der Schwenkhalterung 8 in den Figuren 2 (b) bis 2 (e) sowohl im Querschnitt als auch in der Draufsicht dargestellt sind.

Fünf der in Figur 2 im einzelnen dargestellten Schwenkhalterungen 8 befinden sich in dem in Figur 1 dargestellten Rahmen 9, wobei die Ausrichtung der Gehäuse 10 die Verschwenkhalterungen 8 jeweils zur Walzenachse 3 zeigt, wodurch auch die Stifte 12 in Richtung der Walzenachse 3 weisen. An den aus den Gehäusen 10 herausstehenden Enden der Stifte 12 ist jeweils eine Elektrode 4 befestigt.

Das Rahmengehäuse 16 kann um eine (nicht dargestellte) zur Walzenachse 3 parallele Schwenkachse von der Walze 1 weggeschwenkt werden, beispielsweise um Reparaturarbeiten an den Elektroden 4 durchführen zu können.

Die elektrische Ansteuerung der Elektroden 4 erfolgt durch Zuführung einer hochfrequenten Hochspannung (in an sich bekannter Weise) zu dem über die Isolatoren 18 gegenüber dem Träger 19 isoliert befestigten Rahmen 9 und damit über die Gehäuse 10 der Schwenkhalterungen 8 und deren Stifte 12 zu den Kernen 5 der Elektroden 4. Aufgrund der dielektrischen Umhüllung der Elektroden 4 mit dem keramischen Rohr ergibt sich in dem Behandlungsspalt 17, durch welchen die Folie mit hoher Geschwindigkeit unter Rotation der Walze 1 geführt wird, die gewünschte Coranaentladung. Insoweit entspricht die Funktion der beschriebenen Vorrichtung dem Stand der Technik.

Ergibt sich jedoch eine Betriebsstörung derart, daß zwischen Walze 1 und Rahmengehäuse 16 eine Verdickung gelangt, die größer ist als die Breite des Behandlungsspalts 17 und erreicht diese Verdickung die erste Elektrode 4, so kann diese Elektrode 4 dieser Verdickung schnell ausweichen. Hierbei drückt die Verdickung die Elektrode 4 in Laufrichtung, wodurch der Stift 12 der entsprechenden Schwenkhalterung 8 innerhalb der schlitzförmigen Bodenöffnung 11 sich verschwenkt, bis der Abstand zwischen dem Mantel der Elektrode 4 und der Verdickung so groß ist, daß die Verdickung den Behandlungsspalt 17 passieren kann. Dies erfolgt gegen die Wirkung der Schraubenfeder 7, welche auch bei einem bloßen Verschwenken des Stiftes 12 aufgrund des Verschwenkens und Kippens der pilzförmigen Erweiterung 14 geringfügig gestaucht wird. Sollte die Verdickung so groß sein, daß der Behandlungsspalt 17 durch bloßes Verschwenken der Elektrode 4 nicht ausreichend erweitert werden kann, so kann die Schraubenfeder 7 weiter gestaucht werden und der Stift 12 in das Gehäuse 10 hineingeschoben werden, um weiteren Raum zwischen Walze 1 und Elektrode 4 zu schaffen.

Der gleiche Vorgang wiederholt sich bei den nachfolgenden Elektroden 4, sobald diese von der Verdickung erreicht werden.

Wie in der Beschreibungseinleitung dargelegt, kann es sich bei der Verdickung entweder um einen Fehler bei der Herstellung des bahnartigen Materials oder der Folie handeln oder auch um ein Einfädelband oder um einen Randstreifen, der beim Schneiden der Folie entsteht und sich versehentlich um den Rand der Walze 1 aufwickelt. Selbstverständlich können auch andere Verdickungen auftreten, beispielsweise durch Verschmutzungen des bahnartigen Materials oder schlecht ausgeführte Klebestellen zwischen dem Ende einer Rolle und dem Anfang der sich daran anschließenden Rolle.

Durch die erfindungsgemäße Vorrichtung und insbesondere durch die vorgesehene Schwenkhalterung jeder einzelnen Elektrode ist ein schnelles Ausweichen der Elektroden möglich. Verglichen mit der gesamten Elektrodenanordnung, die bei Vorrichtungen nach dem Stand der Technik wegzuschwenken ist, ist die Trägheit jeder Einzelektrode gering, so daß ein plötzliches Wegschwenken möglich ist, ohne daß die keramische Elektrode beschädigt wird.

Die erfindungsgemäße Vorrichtung und Schwenkhalterung weist jedoch noch weitere Vorteile auf. Befindet sich das Rahmengehäuse 16 in geöffnetem Zustand, also weggeschwenkt von der Walze 1 und befindet sich auf der Walze 1 oder dem über diese Walze geführten bahnartigen Material im ruhenden Zustand der Vorrichtung eine Verdickung, beispielsweise eine Verschmutzung, eine Unregelmäßigkeit der Folie oder ein Einfädelband, und wird das Rahmengehäuse 16 dann geschlossen, so daß eine Elektrode 4 auf der Verdickung aufliegt, so führt dies nicht zum Bruch dieses keramischen Elektrode, da die Elektrode 4 durch Kompression der ihr zugeordneten Schraubenfeder 7 nachgeben kann und über einen Bereich von etwa 1 cm von der Oberfläche der Walze 1 weggedrückt werden kann. Die Elektroden 4 sind also einzeln elastisch und, bezogen auf die Walzenachse 3, radial verschieblich gegenüber der Walze 1 aufgehängt. Wird die Vorrichtung anschließend in Betrieb genommen, passiert die Verdickung die sich anschließenden Elektroden 4, die aufgrund der federnden Aufhängung entweder wegschwenken oder radial nachgeben können, ebenfalls ohne daß diese beschädigt werden.

Die Verwendung der erfindungsgemäßen Vorrichtung und Schwenkhalterung führt daher dazu, daß die teuren Elektroden wesentlich weniger bruchgefährdet sind und weniger häufig ausgewechselt werden müssen und damit ein kontinuierlicherer, störungsfreier Betrieb von Vorrichtungen zur Coronabehandlung möglich ist.

Ferner ermöglicht die erfindungsgemäße Vorrichtung ein von der Laufrichtung der Folie unabhängiges Verschwenken. Dies ist wichtig, da in manchen Anwendungen die Laufrichtung per Folie durch die Apparatur alterniert, beispielsweise, wenn die Vorderseite und die Rückseite der Folie zu behandeln sind.

## Patentansprüche

1. Vorrichtung zur Coronabehandlung eines bahnartigen Materials, mit einer Walze (1) und einer dieser gegenüberliegenden Elektrodenanordnung (2) mit mindestens einer Elektrode (4), wobei zwischen der Walze (1) und jeder Elektrode (4) eine elektrische Coronaentladung zur Behandlung des dort hindurchgeführten bahnartigen Materials erzeugbar ist und jede Elektrode (4) unabhängig von den weiteren Elektroden (4) um eine zur Walzenachse (3) parallele Achse gelenkig gelagert ist, **dadurch gekennzeichnet, dass** jede der länglichen, parallel zueinander und zur Walzenachse (3) verlaufenden Elektroden (4) der Elektrodenanordnung (2) radial zur Walzenachse (3) gegen die Wirkung einer Feder (7) verschiebbar ist und damit aufgrund Kontakt mit einer lokalen Verdickung auf dem bahnartigen Material von der Walze (1) weg schwenkbar ist.

2. Vorrichtung nach Anspruch 1, **dadurch gekennzeichnet, dass** jede Elektrode (4) an ihrer der Walze (1) abgewandten Seite über eine Schwenkhalterung (8) mit einem Rahmen (9) verbunden ist, die Schwenkhalterung ein fest mit dem Rahmen verbundenes, innen im wesentlichen zylindrisches Gehäuse (10) mit einer schlitzförmigen, senkrecht zur Walzenachse (3) verlaufenden Bodenöffnung (11) aufweist, in welche ein fest mit der Elektrode (4) verbundener Stift (12) ragt und sich innerhalb des Gehäuses (10) pilzförmig erweitert (14) und diese Erweiterung (14) sich über eine vorgespannte Schraubenfeder (7) gegen das gegenüberliegende Ende (13) des Gehäuses (10) abstützt.

3. Vorrichtung nach Anspruch 2, **dadurch gekennzeichnet, dass** zwischen der Erweiterung (14) des Stiftes (12) und der Schraubenfeder (7) eine Abstützscheibe (15) angeordnet ist.

4. Schwenkhalterung für eine einzelne Elektrode (4) in einer Vorrichtung nach dem Oberbegriff des Anspruches 1, welche die Elektrode unabhängig von den weiteren Elektroden (4) um eine zur Walzenachse (3) parallele Achse gelenkig lagert **dadurch gekennzeichnet, dass** sie die Elektrode (4) radial zur Walzenachse (3) gegen die Wirkung einer Feder (7) verschiebbar lagert.

5. Schwenkhalterung nach Anspruch 4, **dadurch gekennzeichnet, dass** sie jede Elektrode (4) an ihrer der Walze (1) abgewandten Seite mit einem Rahmen (9) verbindet, ein fest mit dem Rahmen (9) verbundenes, innen im wesentlichen zylindrisches Gehäuse (10) mit einer schlitzförmigen, senkrecht zur Walzenachse (3) verlaufenden Bodenöffnung (11) aufweist, in welche ein fest mit der Elektrode (4) verbundener Stift (12) ragt und sich innerhalb des Gehäuses (10) pilzförmig erweitert (14) und diese Erweiterung (14) sich über eine vorgespannte Schraubenfeder (7) gegen das gegenüberliegende Ende (13) des Gehäuses (10) abstützt.

6. Schwenkhalterung nach Anspruch 5, **dadurch gekennzeichnet, dass** zwischen der Erweiterung (14) des Stiftes (12) und der Schraubenfeder (7) eine Abstützscheibe (15) angeordnet ist.

## Claims

1. Device for corona treatment of a web-like material, with a roll (1) and an electrode arrangement (2) having at least one electrode (4) and lying opposite this roll, wherein an electrical corona discharge can be produced between the roll (1) and each electrode (4) for treatment of the web-like material passed through there and each electrode (4) is mounted pivotable about an axis parallel to the roll axis (3) independently of the other electrodes (4), **characterised in that** each of the elongated electrodes (4) of the electrode arrangement (2) running parallel to one another and to the roll axis (3) is displaceable radially in relation to the roll axis (3) against the action of a spring (7) and in the process is pivotable away from the roll (1) through contact with a local thickening on the web-like material.

2. Device according to claim 1, **characterised in that** on its side facing away from the roll (1) each electrode (4) is connected by means of a pivot mounting (8) to a frame (9), the pivot mounting exhibits an internally essentially cylindrical housing (10) connected firmly to the frame and having a slot-shaped bottom opening (11) which runs perpendicularly to the roll axis (3) and into which a pin (12) connected firmly to the electrode (4) projects and widens in the form of a mushroom (14) inside the housing (10) and this widening (14) is supported on the opposite end (13) of the housing (10) through a preloaded coil spring (7).

3. Device according to claim 2, **characterised in that** a supporting disk (15) is arranged between the widening (14) of the pin (12) and the coil spring (7).

4. Pivot mounting for an individual electrode (4) in a device according to the preamble of claim 1, which mounts the electrode pivotably about an axis parallel to the roll axis (3) independently of the other electrodes (4), **characterised in that** it supports the electrode (4) so that it is displaceable radially in relation to the roll axis (3) against the action of a spring (7).

5. Pivot mounting according to claim 4, **characterised in that** on its side facing away from the roll (1) it connects each electrode (4) to a frame (9), exhibits an internally essentially cylindrical housing (10) connected firmly to the frame (9) and having a slot-shaped bottom opening (11) which runs perpendicularly to the roll axis (3) and into which a pin (12) connected firmly to the electrode (4) projects and widens in the form of a mushroom (14) inside the housing (10) and this widening (14) is supported on the opposite end (13) of the housing (10) through a preloaded coil spring (7).

6. Pivot mounting according to claim 5, **characterised in that** a supporting disk (15) is arranged between the widening (14) of the pin (12) and the coil spring (7).

## Revendications

1. Dispositif pour le traitement corona d'un matériau en bande, comprenant un rouleau (1) et un arrangement d'électrodes (2) situé en face de celui-ci et comprenant au moins une électrode (4), dans lequel on peut générer entre le rouleau (1) et chaque électrode (4) une décharge électrique par effet corona pour le traitement du matériau en bande guidé entre les deux et dans lequel chaque électrode (4) est articulée autour d'un axe parallèle à l'axe du rouleau (3) de manière indépendante des autres électrodes (4), **caractérisé par le fait que** chacune des électrodes (4) allongées, parallèles entre elles et s'étendant vers l'axe du rouleau (3) de l'arrangement d'électrodes (2) peut se déplacer radialement par rapport à l'axe du rouleau (3) contre l'action d'un ressort (7) et ainsi pivoter pour s'écarter du rouleau (1) en cas de contact avec un épaississement local du matériau en bande.

2. Dispositif selon la revendication 1, **caractérisé par le fait que** chaque électrode (4) est reliée par son côté opposé au rouleau (1) à un cadre (9) par un support pivotant (8), que le support pivotant présente un boîtier (10) lié de manière fixe au cadre, essentiellement cylindrique à l'intérieur, avec une ouverture de fond (11) en forme de fente, s'étendant perpendiculairement à l'axe du rouleau (3), dans laquelle fait saillie une tige (12) liée de manière fixe à l'électrode (4) qui s'élargit à l'intérieur du boîtier (10) en forme de champignon (14) et que cet élargissement (14) s'appuie par l'intermédiaire d'un ressort cylindrique (7) précontraint contre l'extrémité opposée (13) du boîtier (10).

3. Dispositif selon la revendication 2, **caractérisé par le fait qu'**une rondelle d'appui (15) est disposée entre l'élargissement (14) de la tige (12) et le ressort cylindrique (7).

4. Support pivotant pour une électrode individuelle (4) dans un dispositif selon le préambule de la revendication 1, sur lequel l'électrode est articulée autour d'un axe parallèle à l'axe du rouleau (3) indépendamment des autres électrodes (4), **caractérisé par le fait que** l'électrode (4) y est montée de manière à pouvoir se déplacer radialement par rapport à l'axe du rouleau (3) contre l'action d'un ressort (7).

5. Support pivotant selon la revendication 4, **caractérisé par le fait qu'**il relie chaque électrode (4) par son côté-opposé au rouleau (1) à un cadre (9), qu'il présente un boîtier (10) lié de manière fixe au cadre, essentiellement cylindrique à l'intérieur, avec une ouverture de fond (11) en forme de fente, s'étendant perpendiculairement à l'axe du rouleau (3), dans laquelle fait saillie une tige (12) liée de manière fixe à l'électrode (4) qui s'élargit à l'intérieur du boîtier (10) en forme de champignon (14) et que cet élargissement (14) s'appuie par l'intermédiaire d'un ressort cylindrique (7) précontraint contre l'extrémité opposée (13) du boîtier (10).

6. Support pivotant selon la revendication 5, **caractérisé par le fait qu'**une rondelle d'appui (15) est disposée entre l'élargissement (14) de la tige (12) et le ressort cylindrique (7).
